# FASCICULE DE BREVET EUROPEEN

(11) **EP 1 247 589 B1**
(45) Date de publication et mention de la délivrance du brevet: **17.12.2003**
(21) Numéro de dépôt: 01201271.2
(22) Date de dépôt: 06.04.2001
(51) Int. Cl.: B06B 1/02, G04G 1/00, H04B 11/00, H04L 29/12

(54) **Procédé et système permettant d'accéder à des informations et/ou données disponibles sur un réseau informatique étendu**
System und Verfahren zum Zugriff auf Informationen und/oder Daten im Internet
System and method for accessing information and/or data available on the Internet

(43) Date de publication de la demande: 09.10.2002
(73) Titulaire: SWATCH AG, CH-2500 Biel (CH)
(72) Inventeur: Nicolas, Hayek Georges, 8032 Zürich (CH); Emmanuel, Fleury, 2740 Moutier (CH); Fabien, Blondeau, 2525 Le Landeron (CH)
(74) Mandataire: Ravenel, Thierry Gérard Louis

(56) Documents cités:
- EP-A- 0 957 589
- EP-A- 1 075 098
- US-A- 5 804 803
- US-A- 5 978 773

## Description

La présente invention est relative à un procédé et un système permettant d'accéder à des informations et/ou données disponibles sur un réseau informatique étendu, tel Internet.

Les réseaux informatiques étendus, ou globaux, tel Internet, sont maintenant utilisés à travers le monde par des millions d'individus pour convoyer des informations et des données de tout type, telles des données textuelles, des images ou tout autre média susceptible d'être traduit sous forme digitale. L'essor de ces réseaux a été fulgurant durant cette dernière décennie et la quantité d'informations maintenant accessibles par tout un chacun est devenue pratiquement illimitée.

L'accès aux sites sur ces réseaux informatiques est régit par des adresses déterminées, ou liens, (également dénommées URL's - « Universal Resource Locator ») généralement attribuées par des organismes régulateurs nationaux. Un utilisateur désireux de se connecter sur un site spécifique doit nécessairement mémoriser ces adresses pour obtenir l'information pertinente qu'il recherche, ces adresses étant plus ou moins longues et complexes à mémoriser. Bien que ces adresses soient généralement « traduites » et spécifiées sous la forme de termes intelligibles se rapportant typiquement à la raison commerciale ou l'appellation employée par la société ou le particulier entretenant ces sites, il existe un risque récurrent d'erreur lors de l'introduction d'une telle adresse, erreur qui peut conduire à la connexion à site autre que celui qui était originellement voulu ou, tout simplement, à une non-connexion au site désiré.

De plus, compte tenu de la complexité typique de l'organisation des sites, l'utilisateur est généralement conduit à se connecter tout d'abord à la page principale du site en question avant de pouvoir accéder à la page spécifique du site sur laquelle figure l'information qu'il recherche. Ce problème est d'autant plus fréquent que les pages de ces sites sont régulièrement mises à jour et que les adresses propres à ces pages peuvent évoluer fortement au gré de la maintenance des sites.

Ceci constitue également un problème majeur pour les sociétés ou les particuliers désireux d'offrir des services ciblés aux clients ou aux utilisateurs ainsi qu'un accès rapide et non détourné à l'information.

Il n'existe d'autre part pas de cohésion réelle entre ce média d'informations et de données constitué par les réseaux informatiques globaux, et les autres médias traditionnels tel que la télévision ou la radio par exemple. Bien qu'il soit actuellement possible d'indiquer verbalement ou visuellement à un utilisateur potentiel une adresse d'un site par le biais d'un spot TV, radio ou de toute autre annonce visuelle ou auditive retransmise par des moyens analogues, ce mode de communication n'est pas actuellement satisfaisant, notamment en raison de la complexité et de l'étendue de l'information devant être mémorisée par l'utilisateur comme cela a déjà été mentionné plus haut. Lorsque ce mode de communication est utilisé, on se contente ainsi typiquement d'indiquer l'adresse principale du site sur le réseau, et non la page de ce site sur laquelle figure à proprement parler l'information pertinente. C'est alors l'utilisateur lui-même qui parcoure le site en question pour trouver l'information désirée.

Il existe ainsi un besoin réel pour une solution permettant à la fois à un utilisateur d'accéder aisément, sans détour et rapidement à des données et/ou des informations disponibles sur ces réseaux informatiques globaux, et aux gérants des sites de fournir un accès direct aux pages contenant ces données et/ou informations.

Un but général de la présente invention est ainsi de proposer une telle solution permettant de faciliter l'accès aux données ou informations disponibles sur les réseaux informatiques globaux.

Un autre but de la présente invention est de proposer une solution qui soit aisée à mettre en oeuvre, si possible au moyen d'installations existantes, ou tout du moins avec aussi peu de modifications que possible.

Encore un autre but de la présente invention est de proposer une solution qui assure une interface entre les médias traditionnels de transmission d'information, telle que la télévision ou la radio, et les réseaux informatiques étendus tel qu'Internet.

La présente invention a ainsi pour objet un procédé permettant d'accéder à des informations et/ou données disponibles sur un réseau informatique étendu dont les caractéristiques sont énoncées dans la revendication 1.

La présente invention a également pour objet un système permettant d'accéder à des informations et/ou données disponibles sur un réseau informatique étendu dont les caractéristiques sont énoncées dans la revendication 8.

Des modes de réalisation avantageux de la présente invention font l'objet des revendications dépendantes.

Selon l'invention, des identificateurs associés chacun à l'adresse d'un site (ou d'une page de ce site) et, éventuellement, à une « clé » donnant accès à des données privilégiées sur un site, sont transmis sous la forme d'un signal acoustique modulé par le biais de moyens de transmission acoustique. Ce signal acoustique modulé peut être transmis à un vaste panel d'utilisateurs par l'intermédiaire d'un média de large distribution, telle que la télévision ou la radio, ou à un groupe d'utilisateurs plus restreint au moyen d'une installation spécifique par exemple disposée dans un lieu délimité, tel un magasin, un lieu touristique, un musée, etc.

La plupart des équipements de retransmission d'informations, telle que la TV ou la radio, sont équipés de haut-parleurs permettant la restitution de signaux audio susceptibles d'être perçus par les utilisateurs. L'utilisation de ce mode de transmission déjà existant pour communiquer des liens à des données ou des informations disponibles sur les réseaux informatiques étendus ne nécessite ainsi pas d'adaptations particulières de ces équipements de sorte que l'invention peut être mise en oeuvre à moindres coûts.

On notera à ce titre que l'on connaît déjà, notamment des documents EP 1 075 098 et WO 01/10064 au nom de Eta SA Fabriques d'Ebauches des dispositifs permettant la transmission et l'échange de données par l'intermédiaire d'une interface acoustique. Ce mode de communication est par exemple appliqué dans le document WO 01/09689, également au nom de Eta SA Fabriques d'Ebauches, pour la mise à l'heure d'un objet portatif ayant une fonction horlogère.

Le document US 5978773 présente, d'autre part, un système d'acquisition de "codes barres" et de successives comparaisons dans une base de données, afin de retrouver une adresse Internet associée aux dits "codes barres".

Selon l'invention, les identificateurs sont transmis et mémorisés dans une unité de communication mobile portée par l'utilisateur, telle une montre-bracelet. Ces identificateurs sont ultérieurement déchargés par l'utilisateur, préférablement également au moyen d'une interface acoustique, sur un terminal informatique connecté au réseau informatique étendu sur lequel figurent les informations ou les données recherchées.

Préférablement, le terminal informatique est connecté à un site spécifique sur le réseau informatique étendu comportant une base de données contenant une liste des identificateurs et des liens associés à ces identificateurs. Une comparaison est opérée entre les identificateurs chargés par l'utilisateur et les identificateurs présents dans la base de données, et les liens correspondants sont rendus accessibles à l'utilisateur.

Le procédé et le système selon l'invention peuvent notamment être utilisés afin de convoyer des informations publicitaires ciblées (annonce spéciale, offre limitée dans le temps, bons cadeaux, etc.) vers un groupe d'utilisateurs ou clients potentiels, ou diriger ces utilisateurs directement vers une page d'information détaillée relative à un événement d'actualité (flash d'information, résultats sportifs compréhensifs, etc.). Ce procédé et ce système peuvent également être utilisés, dans des lieux culturels ou touristiques, pour transmettre aux utilisateurs un lien spécifique à un site concernant le lieu visité, lien que ces utilisateurs peuvent utiliser pour obtenir ultérieurement de plus amples informations sur le lieu culturel ou touristique visité.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1 montre de manière schématique un système permettant d'accéder à des données et/ou informations disponibles sur un réseau informatique étendu selon la présente invention; et
- la figure 2 montre schématiquement un exemple de réalisation particulier de l'unité de communication portable 1 utilisée dans le système selon l'invention.

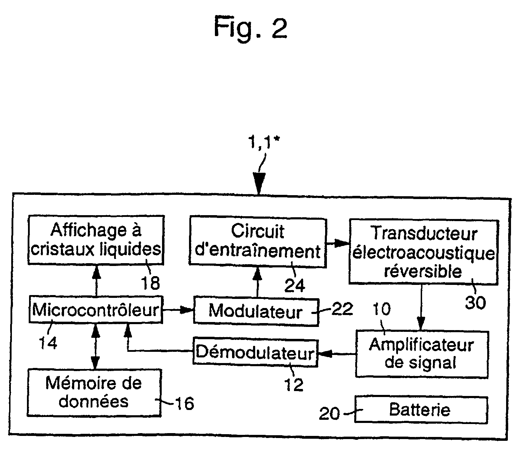

Selon l'invention, chaque utilisateur potentiel est équipé d'une unité portable de communication 1 pouvant avantageusement se présenter sous la forme d'une montre-bracelet comme illustré. Cette unité portable de communication 1 comporte notamment des moyens de réception et d'émission de signaux acoustiques modulés et est représentée de manière plus détaillée dans la figure 2.

La figure 2 montre schématiquement un exemple de réalisation particulier de l'unité de communication portable 1 pouvant prendre la forme d'une pièce d'horlogerie. L'unité 1 comprend des moyens de réception formés par un transducteur électroacoustique 30 qui joue le rôle d'un microphone et qui transforme classiquement le signal acoustique incident en une succession de signaux électriques qui vont ensuite être convertis par des moyens de conversion de l'unité portable 1 en données destinées à être traitées et mémorisées. Dans l'exemple représenté à la figure 2, les moyens de conversion de l'unité portable 1 comprennent un amplificateur 10 du signal électrique produit par le transducteur électroacoustique 30 et un démodulateur 12 relié à l'amplificateur de signal 10 et destiné à démoduler le signal acoustique reçu par le transducteur 30 et à transmettre le signal démodulé sur une entrée d'un microcontrôleur 14. Le microcontrôleur 14 constitue des moyens de traitement de l'unité portable 1. L'information portée par le signal acoustique reçu, démodulée par le démodulateur 12 et traité par le microcontrôleur 14, est stockée dans une mémoire 16 de l'unité 1 et, le cas échéant, peut être affichée sur un dispositif d'affichage 18 par exemple à cristaux liquides. Une batterie 20, éventuellement rechargeable, alimente l'unité portable 1 en courant électrique.

Préférablement, l'unité portable 1 est également munie de moyens de conversion et d'émission pour convertir les données stockées en mémoire 16 et fournies par les moyens de traitement 14 en un signal acoustique modulé représentatif des données stockées, et émettre ce signal acoustique. Comme représenté sur la figure 2, les moyens de conversion de l'unité portable 1 comprennent un circuit de modulation 22 qui attaque, via à un circuit d'entraînement 24, les moyens d'émission, à savoir le transducteur électroacoustique 30 jouant, dans ce cas, le rôle de haut-parleur. Les moyens de traitement de l'unité portable 1, c'est-à-dire le microcontrôleur 14, effectuent la commande du circuit de modulation 22 à l'aide des données en provenance de la mémoire 16 associée au microcontrôleur 14.

Avantageusement, les moyens de conversion et d'émission et les moyens de réception et de conversion de l'unité portable 1 utilisent un seul et même transducteur électroacoustique 30 qui fonctionne de manière réversible, c'est-à-dire à la fois comme microphone et comme haut-parleur. On comprendra néanmoins que deux transducteurs électroacoustiques distincts peuvent également être utilisés.

L'unité portable de communication 1 est adaptée pour recevoir un premier signal acoustique modulé, désigné A, transmis par des moyens d'émission adéquats. Ces moyens d'émission peuvent avantageusement être constitués d'un téléviseur 2 connecté au réseau hertzien, câblé ou satellite de transmission de programmes télévisuels ou, par analogie, d'un poste de radio 3 connecté au réseau de retransmission radio. Le signal acoustique modulé A est typiquement transmis, par exemple au cours d'un spot publicitaire ou d'un programme de retransmission, comme un signal audio (modulé par une séquence numérique) au moyen du ou des haut-parleurs 2a, 3a dont sont typiquement équipés le téléviseur 2 ou le poste de radio 3.

Alternativement, pour des applications destinées à toucher un public plus restreint, par exemple dans un magasin ou un lieu touristique ou culturel, le signal acoustique modulé A peut être transmis par un dispositif spécifique 4 comportant essentiellement, et de manière analogue au téléviseur 2 ou au poste de radio 3, un haut-parleur 4a. Ce haut-parleur 4a peut par exemple être commandé par un système informatisé 4b agencé pour générer les signaux acoustiques modulés A, tel un micro-ordinateur ou autre terminal informatique. On comprendra bien évidemment que le dispositif 4 peut prendre des formes variées, l'essentiel étant qu'il comporte des moyens d'émission d'un signal acoustique (tel le haut-parleur 4a) et des moyens permettant de générer ces signaux acoustiques.

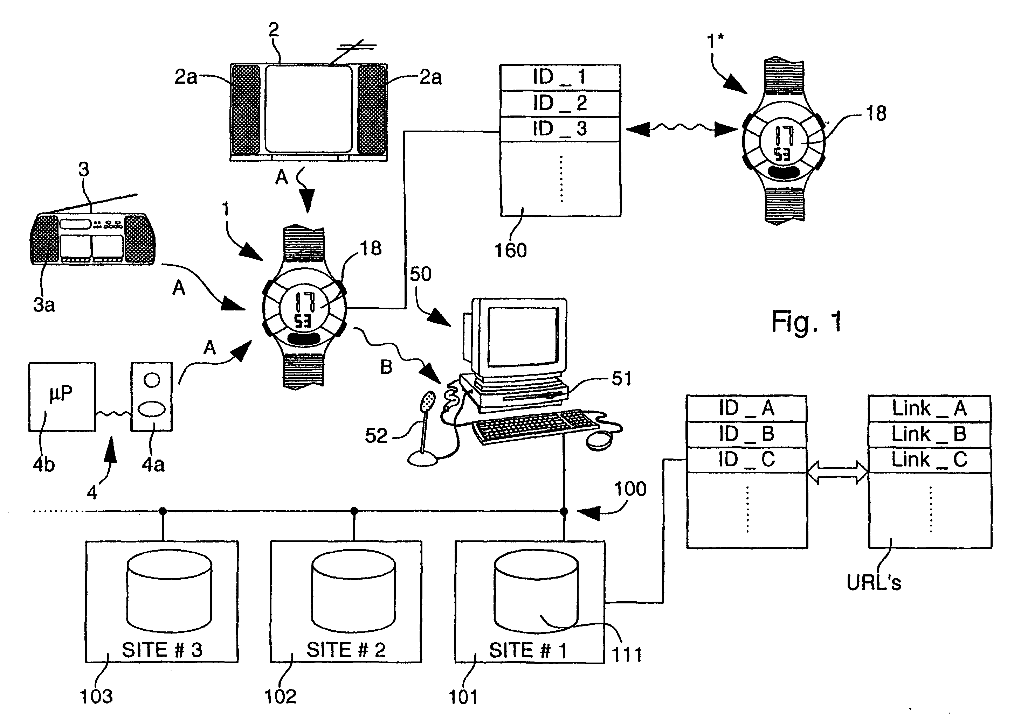

Le signal acoustique modulé A comprend, selon l'invention, un ou plusieurs identificateurs désignés ID_n (n = 1, 2, 3, ...). Ces identificateurs ID_n sont associés chacun à un lien (déterminé en fonction de l'application ou du moment) vers un site déterminé (site 101, 102, 103, etc.) sur le réseau informatique étendu, désigné 100 dans la figure 1. Le signal acoustique modulé A peut comprendre un ou plusieurs de ces identificateurs.

Les identificateurs ID_n sont par exemple constitués d'une séquence numérique binaire au moyen de laquelle le signal acoustique A est modulé. L'homme du métier dispose d'un nombre très varié de solutions pour moduler le signal acoustique au moyen d'une séquence numérique binaire, telle que la modulation d'amplitude, la modulation de fréquence (par exemple selon une technique dénommée Frequency-Shift Keying, abrégée FSK, où la fréquence du signal est commutée entre deux fréquences déterminées) ou la modulation de phase (par exemple selon une technique dénommée Phase-Shift Keying, abrégée PSK, où le signal est alternativement déphasé de 180° selon que l'on désire transmettre un « 1 » ou un « 0 »). Des informations détaillées concernant ces techniques de modulation connues peuvent être trouvées dans l'ouvrage « Electronics Engineers' Handbook », D. Christiansen, 4^{ème} édition, McGraw-Hill, 1997, chapitre 18, pp. 18.40 à 18.44.

Les identificateurs ID_n transmis au moyen du signal acoustique modulé A sont mémorisés dans la mémoire de données (16 dans la figure 2) de chaque unité de communication 1 tel que cela est schématisé par les champs mémoires désignés 160 dans la figure 1.

Selon une variante de l'invention, un ou plusieurs de ces identificateurs ID_n peuvent être échangés avec une unité de communication analogue, désignée 1*, équipant un autre utilisateur. Par sélection d'un identificateur parmi l'ensemble des identificateurs mémorisés (par exemple l'identificateur ID_3 comme illustré), un utilisateur peut ainsi aisément transmettre un lien préalablement mémorisé à un autre utilisateur du système. Cet échange est préférablement et avantageusement effectué au moyen de l'interface acoustique de chaque unité de communication 1, 1*.

Les identificateurs ID_n mémorisés dans l'unité de communication 1, sont ensuite déchargés sur un terminal informatique, désigné 50, comportant notamment une unité centrale de traitement 51 connectée au réseau informatique étendu 100. Ce terminal informatique 50 est préférablement équipé d'un moyen lui permettant de recevoir un signal acoustique externe, par exemple un microphone 52. Les identificateurs ID_n mémorisés dans l'unité de communication portable 1 sont ainsi déchargés au moyen de l'interface acoustique entre le terminal informatique 50 et l'unité 1 par transmission d'un signal acoustique modulé, désigné B, et au moins temporairement stockés dans la mémoire de l'unité centrale de traitement 51.

Alternativement, on comprendra que le déchargement des identificateurs pourrait être effectué par d'autres moyens que des moyens acoustiques, tel que des moyens optiques ou radio-fréquence, ou par l'intermédiaire d'un connexion par câble. On comprendra néanmoins que l'utilisation d'une interface acoustique constitue un avantage déterminant car pratiquement l'intégralité des terminaux informatiques modernes sont équipés de moyens de réception de signaux acoustiques ou tout du moins peuvent en être équipés à moindres coûts, alors que l'utilisation d'autres moyens de transmission nécessite des équipements spécifiques non standards ou implique une construction compliquée de l'unité de communication portable 1.

Au titre de réalisation particulièrement avantageuse, on pourra faire appel à l'unité de communication 1 illustrée en figure 2 et employant un convertisseur électronique d'un signal acoustique et un procédé de communication par ondes acoustiques tel que décrit dans la demande de brevet européen No. EP 1 075 098 déjà mentionnée. Selon cette demande, on peut en particulier avantageusement faire appel à un circuit générateur de sons employant un vibreur piézo-électrique.

Une fois les identificateurs ID_n déchargés sur le terminal informatique 50, ceux-ci sont comparés à une liste déterminée d'identificateurs ID_A, ID_B, ID_C, etc., correspondant chacun à un lien déterminé Link_A, Link_B, Link_C, etc., vers un site ou une page déterminée d'un site sur le réseau informatique étendu 100. Une liste des liens correspondant aux identificateurs déchargés est alors générée par le terminal informatique 50 et rendue accessible à l'utilisateur pour s'y connecter. Cette connexion peut avantageusement être rendue automatique dès lors que la comparaison des identificateurs a pu être effectuée.

Préférablement, le terminal informatique 50 est connecté à un site spécifique sur le réseau informatique étendu 100 (à titre d'exemple uniquement le site www.swatch.com), ce site spécifique, désigné 101 dans la figure 1, comprenant une base de données 111 contenant la liste déterminées des identificateurs ID_A, ID_B, ID_C, etc., et des liens associés Link_A, Link_B, Link_C, etc. La comparaison de cette liste avec les identificateurs déchargés peut alors être effectué par le site spécifique 101, de sorte que seul un petit applicatif, ou « plug-in », doit être installé sur le terminal informatique 50, ceci ne nécessitant par ailleurs pas le téléchargement, sur le terminal informatique 50, de la liste déterminée des liens et des identificateurs associés.

Outre des liens à des sites ou des pages spécifiques de sites sur le réseau informatique étendu 100, les identificateurs peuvent également être associés à une clé donnant accès à des données privilégiées sur le site auquel est associé ledit identificateur. Par exemple, dans l'optique d'un programme de fidélisation de clients, le système pourrait être utilisé pour accumuler des points de fidélité sur un compte hébergé par un site du réseau informatique étendu 100.

Par ailleurs, un identificateur pourrait également déclencher automatiquement un processus prédéfini sur le terminal informatique. Par exemple, lorsque l'utilisateur décharge un identificateur de ce type sur son terminal informatique, cet identificateur pourrait avantageusement déclencher automatiquement une application tel l'applicatif lui permettant de se connecter au site déterminé 101 comprenant la base de données 111. Cet identificateur pourrait également modifier certains paramètres du terminal informatique telle que la représentation graphique de son écran, la génération d'une mélodie, etc.

On comprendra que diverses modifications et/ou améliorations évidentes pour l'homme du métier peuvent être apportées au mode de réalisation décrit dans la présente description sans sortir du cadre de l'invention défini par les revendications annexées. En particulier, on comprendra que le terme « lien » englobe toute adresse ou toute référence permettant à un utilisateur de se connecter à un site particulier sur le réseau ou à une page spécifique sur ce site.

## Revendications

1. Procédé permettant d'accéder à des informations et/ou données disponibles sur un réseau informatique étendu (100), tel internet, ce procédé comprenant :
a) une étape de transmission d'un premier signal acoustique modulé (A) à destination d'un groupe d'utilisateurs potentiels équipés chacun d'une unité portable de communication (1, 1*), ce premier signal acoustique modulé (A) comprenant au moins un identificateur (ID_1, ID_2, ID_3, ...) associé à un lien vers un site déterminé (101, 102, 103) dudit réseau informatique étendu (100) ;
b) une étape de mémorisation, dans ladite unité portable de communication (1, 1*), du ou des identificateurs (ID_1, ID_2, ID_3, ...) transmis au moyen dudit premier signal acoustique modulé (A) ;
c) une étape de déchargement du ou des identificateurs (ID_1, ID_2, ID_3, ...) mémorisés dans l'unité portable de communication (10) vers un terminal informatique (50, 51, 52) connecté au dit réseau informatique étendu (100) ; et
d) une étape de comparaison du ou des identificateurs (ID_1, ID_2, ID_3, ...) déchargés avec une liste déterminée d'identificateurs (ID_A, ID_B, ID_C, ...) afin de générer une liste de liens (Link_A, Link_B, Link_C, ...) vers des sites correspondant à ou aux identificateurs (ID_1, ID_2, ID_3, ...) déchargés.

2. Procédé selon la revendication 1, **caractérisé en ce que** ladite étape de déchargement c) est opérée par transmission, vers ledit terminal informatique (50, 51, 52), d'un second signal acoustique modulé (B) comportant le ou les identificateurs (ID_1, ID_2, ID_3, ...) mémorisés par ladite unité portable de communication (1, 1*).

3. Procédé selon la revendication 1 ou 2, **caractérisé en ce que** ledit terminal informatique (50, 51, 52) est connecté à un site spécifique (101) dudit réseau informatique étendu (100) comprenant une base de données (111) contenant ladite liste déterminée d'identificateurs (ID_A, ID_B, ID_C, ...) et **en ce que** ladite étape de comparaison d) est effectuée par ledit site spécifique (101).

4. Procédé selon l'une quelconque des revendications précédentes, **caractérisé en ce qu'**au moins un identificateur est en outre associé à une clé donnant accès à des données privilégiées sur le site auquel est associé ledit identificateur.

5. Procédé selon l'une quelconque des revendications précédentes, **caractérisé en ce qu'**au moins un identificateur déclenche automatiquement un processus prédéfini sur ledit terminal informatique (50), telle que la connexion à un site déterminé (101) sur ledit réseau informatique étendu (100), dès lors que cet identificateur est déchargé sur le terminal informatique (50).

6. Procédé selon l'une quelconque des revendications précédentes, **caractérisé en ce que** au moins un identificateur (ID_3) est retransmis d'une unité portable de communication (1) d'un utilisateur vers l'unité portable de communication (1*) d'un autre utilisateur.

7. Procédé selon l'une quelconque des revendications précédentes, **caractérisé en ce que** ledit premier signal acoustique modulé (A) est transmis au moyen d'une installation de retransmission TV (2, 2a) ou radio (3, 3a).

8. Système permettant d'accéder à des informations et/ou données disponibles sur un réseau informatique étendu (100), tel internet, ce système comprenant :
- des moyens d'émission (2, 2a, 3, 3a, 4, 4a, 4b) d'un premier signal acoustique modulé (A) à destination d'un groupe d'utilisateurs potentiels, ce premier signal acoustique modulé (A) comprenant au moins un identificateur (ID_1, ID_2, ID_3, ...) associé à un lien vers un site déterminé (101, 102, 103) dudit réseau informatique étendu (100) ;
- une unité portable de communication (1, 1*) équipant chaque utilisateur, cette unité portable de communication (1, 1*) comportant des moyens de réception (10, 12, 14, 30) dudit premier signal acoustique modulé (A), des moyens de mémorisation (16) du ou des identificateurs (ID_1, ID_2, ID_3, ...) transmis au moyen dudit premier signal acoustique modulé (A), et des moyens (14, 22, 24, 30) pour décharger le ou les identificateurs (ID_1, ID_2, ID_3, ...) mémorisés par ladite unité portable de communication ; et
- un terminal informatique (50, 51, 52) connecté au dit réseau informatique étendu (100) et comprenant des moyens de déchargement (51, 52) adaptés pour recevoir le ou les identificateurs déchargés depuis l'unité portable de communication, ce terminal informatique étant agencé pour permettre la comparaison du ou des identificateurs (ID_1, ID_2, ID_3, ...) déchargés avec une liste déterminée d'identificateurs (ID_A, ID_B, ID_C, ...) et de générer une liste de liens (Link_A, Link_B, Link_C, ...) vers des sites correspondant à ou aux identificateurs (ID_1, ID_2, ID_3, ...) déchargés.

9. Système selon la revendication 8, **caractérisé en ce que** lesdits moyens (14, 22, 24, 30) pour décharger le ou les identificateurs (ID_1, ID_2, ID_3, ...) sont des moyens d'émission d'un second signal acoustique modulé (B) comportant le ou les identificateurs (ID_1, ID_2, ID_3, ...) mémorisés par ladite unité portable de communication,
et **en ce que** lesdits moyens de déchargement (51, 52) pour recevoir le ou les identificateur déchargés depuis l'unité portable de communication sont adaptés pour recevoir ledit second signal acoustique modulé (B).

10. Système selon la revendication 8 ou 9, **caractérisé en ce que** ledit terminal informatique (50, 51, 52) est connecté à un site spécifique (101) dudit réseau informatique étendu (100) comprenant une base de données (111) contenant ladite liste déterminée d'identificateurs (ID_A, ID_B, ID_C, ...) et **en ce que** la comparaison du ou des identificateurs (ID_1, ID_2, ID_3, ...) déchargés avec la liste déterminée d'identificateurs (ID_A, ID_B, ID_C, ...) est effectuée par ledit site spécifique (101).

11. Système selon la revendication 8, 9 ou 10, **caractérisé en ce qu'**au moins un identificateur est en outre associé à une clé donnant accès à des données privilégiées sur le site auquel est associé ledit identificateur.

12. Système selon l'une quelconque des revendications 8 à 11, **caractérisé en ce que** ledit premier signal acoustique modulé (A) est transmis au moyen d'une installation de retransmission TV (2, 2a) ou radio (3, 3a).

## Claims

1. Method for accessing information and/or data available on a wide area computer network (100), such as the Internet, said method including:
a) transmitting a first modulated acoustic signal (A) to a group of potential users each provided with a portable communication unit (1, 1*), this first modulated acoustic signal (A) including at least one identifier (ID_1, ID_2, ID_3, ...) associated with a link to a determined site (101, 102, 103) of said wide area computer network (100);
b) storing, in said portable communication unit (1, 1*), the identifier or identifiers (ID_1, ID_2, ID_3, ...) transmitted by means of said first modulated acoustic signal (A);
c) downloading the identifier or identifiers (ID_1, ID_2, ID_3, ...) stored in the portable communication unit (1) onto a computer terminal (50, 51, 52) connected to said wide area computer network (100); and
d) comparing the downloaded identifier or identifiers (ID_1, ID_2, ID_3, ...) with a determined list of identifiers (ID_A, ID_B, ID_C, ...) in order to generate a list of links (Link_A, Link_B, Link_C, ...) to sites corresponding to the downloaded identifier or identifiers (ID_1, ID_2, ID_3, ...).

2. Method according to claim 1, **characterised in that** said downloading step c) is achieved by transmitting, to said computer terminal (50, 51, 52), a second modulated acoustic signal (B) including the identifier or identifiers (ID_1, ID_2, ID_3,...) stored by said portable communication unit (1, 1*).

3. Method according to claim 1 or 2, **characterised in that** said computer terminal (50, 51, 52) is connected to a specific site (101) of said wide area computer network (100) including a database (111) containing said determined list of identifiers (ID_A, ID_B, ID_C, ...) and **in that** said comparing step d) is effected by said specific site (100).

4. Method according to any one of the preceding claims, **characterised in that** at least one identifier is also associated with a key providing access to privileged data on the site with which said identifier is associated.

5. Method according to any one of the preceding claims, **characterised in that** at least one identifier automatically starts a predefined process in said computer terminal (50), such as connection to a determined site (101) of said wide area computer network (100), as soon as the identifier is downloaded onto the computer terminal (50).

6. Method according to any one of the preceding claims, **characterised in that** at least one identifier (ID_3) is retransmitted from a portable communication unit (1) of a user to the portable communication unit (1*) of another user.

7. Method according to any one of the preceding claims, **characterised in that** said first modulated acoustic signal (A) is transmitted by means of a TV (2, 2a) or radio (3, 3a) retransmission installation.

8. System for accessing information and/or data available on a wide area computer network (100), such as the Internet, said system including:
- means (2, 2a, 3, 3a, 4, 4a, 4b) for transmitting a first modulated acoustic signal (A) to a group of potential users, this first modulated acoustic signal (A) including at least one identifier (ID_1, ID_2, ID_3, ...) associated with a link to a determined site (101, 102, 103) of said wide area computer network (100);
- a portable communication unit (1, 1*), with which each user is provided, this portable communication unit (1, 1*) including means for receiving (10, 12, 14, 30) said first modulated acoustic signal (A), means (16) for storing the identifier or identifiers (ID_1, ID_2, ID_3, ...) transmitted by means of said first modulated acoustic signal (A), and means (14, 22, 24, 30) for uploading the identifier or identifiers (ID_1, ID_2, ID_3, ...) stored by said portable communication unit; and
- a computer terminal (50, 51, 52) connected to said wide area computer network (100) and including downloading means (51, 52) adapted to receive the identifier or identifiers downloaded from the portable communication unit, this computer terminal being arranged to permit the comparison of the downloaded identifier or identifiers (ID_1, ID_2, ID_3, ...) with a determined list of identifiers (ID_A, ID_B, ID_C, ...) and to generate a list of links (Link_A, Link_B, Link_C, ...) to sites corresponding to the downloaded identifier or identifiers (ID_1, ID_2, ID_3, ...).

9. System according to claim 8, **characterised in that** said means (14, 22, 24, 30) for uploading the identifier or identifiers (ID_1, ID_2, ID_3, ...) are means for transmitting a second modulated acoustic signal (B) including the identifier or identifiers (ID_1, ID_2, ID_3, ...) stored by the portable communication unit,
and **in that** said downloading means (51, 52) for receiving the identifier or identifiers downloaded from the portable communication unit are adapted to receive said second modulated acoustic signal (B).

10. System according to claim 8 or 9, **characterised in that** said computer terminal (50, 51, 52) is connected to a specific site (101) of said wide area computer network (100) including a database (111) containing said determined list of identifiers (ID_A, ID_B, ID_C, ...) and **in that** the comparison of the downloaded identifier or identifiers (ID_1, ID_2, ID_3, ...) with the determined list of identifiers (ID_A, ID_B, ID_C, ...) is effected by said specific site (101).

11. System according to claim 8, 9 or 10, **characterised in that** at least one identifier is also associated with a key providing access to privileged data of the site with which said identifier is associated.

12. System according to any one of claims 8 to 11, **characterised in that** said first modulated acoustic signal (A) is transmitted by means of a TV (2, 2a) or radio (3, 3a) retransmission installation.

## Patentansprüche

1. Verfahren, das einen Zugriff auf Informationen und/oder Daten ermöglicht, die in einem Weitverkehrsdatennetz (100) wie etwa dem Internet verfügbar sind, wobei dieses Verfahren umfaßt :
a) einen Schritt des Übertragens eines ersten modulierten akustischen Signals (A) an eine Gruppe potentieller Anwender, die jeweils mit einer tragbaren Kommunikationseinheit (1, 1*) ausgerüstet sind, wobei dieses erste modulierte akustische Signal (A) wenigstens eine Kennung (ID_1, ID_2, ID_3, ...), die einer Verknüpfung zu einem bestimmten Ort (101, 102, 103) des Weitverkehrsdatennetzes (100) zugeordnet ist, umfaßt ;
b) einen Schritt des Speicherns der Kennung(en) (ID_1, ID_2, ID_3, ...), die mittels des ersten modulierten akustischen Signals (A) übertragen wird (werden), in der tragbaren Kommunikationseinheit (1, 1*) ;
c) einen Schritt des Herunterladens der Kennung(en) (ID_1, ID_2, ID_3, ...), die in der tragbaren Kommunikationseinheit (10) gespeichert ist (sind), an ein Datenendgerät (50, 51, 52), das mit dem Weitverkehrsdatennetz (100) verbunden ist ; und
d) einen Schritt des Vergleichens der heruntergeladenen Kennung(en) (ID_1, ID_2, ID_3, ...) mit einer gegebenen Liste von Kennungen (ID_A, ID_B, ID_C, ...), um eine Liste von Verknüpfungen (Link_A, Link_B, Link_C, ...) zu Orten, die der oder den heruntergeladenen Kennungen (ID_1, ID_2, ID_3, ...) entsprechen, zu erzeugen.

2. Verfahren nach Anspruch 1, **dadurch gekennzeichnet, daß** der Herunterladeschritt c) durch Übertragen eines zweiten modulierten akustischen Signals (B), das die Kennung(en) (ID_1, ID_2, ID_3, ...), die von der tragbaren Kommunikationseinheit (1, 1 *) gespeichert wird (werden), enthält, an das Datenendgerät (50, 51, 52) ausgeführt wird.

3. Verfahren nach Anspruch 1 oder 2, **dadurch gekennzeichnet, daß** das Datenendgerät (50,51,52) mit einem bestimmten Ort (101) des Weitverkehrsdatennetzes (100) verbunden ist, der eine Datenbank (111) enthält, die die gegebene Liste von Kennungen (ID_A, ID_B, ID_C, ...) enthält, und daß der Vergleichsschritt d) durch den bestimmten Ort (101) ausgeführt wird.

4. Verfahren nach einem der vorhergehenden Ansprüche, **dadurch gekennzeichnet, daß** wenigstens einer Kennung außerdem ein Schlüssel zugeordnet ist, der Zugriff auf privilegierte Daten an dem Ort, dem die Kennung zugeordnet ist, gewährt.

5. Verfahren nach einem der vorhergehenden Ansprüche, **dadurch gekennzeichnet, daß** wenigstens eine Kennung automatisch einen in dem Datenendgerät (50) im voraus definierten Prozeß auslöst, etwa die Verbindung mit einem bestimmten Ort (101) in dem Weitverkehrsdatennetz (100), sobald diese Kennung in das Datenendgerät (50) heruntergeladen wird.

6. Verfahren nach einem der vorhergehenden Ansprüche, **dadurch gekennzeichnet, daß** wenigstens eine Kennung (ID_3) von einer tragbaren Kommunikationseinheit (1) eines Anwenders an eine tragbare Kommunikationseinheit (1*) eines weiteren Anwenders zurückübertragen wird.

7. Verfahren nach einem der vorhergehenden Ansprüche, **dadurch gekennzeichnet, daß** das erste modulierte akustische Signal (A) mittels einer Fernsehübertragungsanlage (2, 2a) oder Radioübertragungsanlage (3, 3a) übertragen wird.

8. System, das einen Zugriff auf Informationen und/oder Daten ermöglicht, die in einem Weitverkehrsdatennetz (100) wie etwa dem Internet verfügbar sind, wobei das System umfaßt:
- Mittel (2, 2a, 3, 3a, 4, 4a, 4b) zum Senden eines ersten modulierten akustischen Signals an eine Gruppe potentieller Anwender, wobei dieses erste modulierte akustische Signal (A) wenigstens eine Kennung (ID_1, ID_2, ID_3, ...) aufweist, die einer Verknüpfung zu einem bestimmten Ort (101, 102, 103) des Weitverkehrsdatennetzes (100) zugeordnet ist ;
- eine tragbare Kommunikationseinheit (1, 1*), mit der jeder Anwender ausgerüstet ist und die Mittel (10, 12, 14, 30) für den Empfang des ersten modulierten akustischen Signals (A), Mittel (16) zum Speichern der Kennung(en) (ID_1, ID_2, ID_3, ...), die mittels des ersten modulierten akustischen Signals (A) übertragen wird (werden), und Mittel (14, 22, 24, 30) zum Herunterladen der von der tragbaren Kommunikationseinheit gespeicherten Kennung(en) (ID_1, ID_2, ID_3,...) umfassen ; und
- ein Datenendgerät (50, 51, 52), das mit dem Weitverkehrsdatennetz (100) verbunden ist und Herunterlademittel (51, 52) aufweist, die die von der tragbaren Kommunikationseinheit heruntergeladene(n) Kennung(en) empfangen können, wobei dieses Datenendgerät so beschaffen ist, daß es den Vergleich der heruntergeladenen Kennung(en) (ID_1, ID_2, ID_3, ...) mit einer gegebenen Liste von Kennungen (ID_A, ID_B, ID_C, ...) und das Erzeugen einer Liste von Verknüpfungen (Link_A, Link_B, Link_C, ...) zu den Orten, die der oder den heruntergeladenen Kennungen (ID_1, ID_2, ID_3, ...) entsprechen, ermöglicht.

9. System nach Anspruch 8, **dadurch gekennzeichnet, daß** die Mittel (14, 22, 24, 30) zum Herunterladen der Kennung(en) (ID_1, ID_2, ID_3, ...) Mittel zum Senden eines zweiten modulierten akustischen Signals (B), das die Kennung(en) (ID_1, ID_2, ID_3, ...) enthält, sind, und
daß die Herunterlademittel (51, 52) zum Empfangen der von der tragbaren Kommunikationseinheit heruntergeladene(n) Kennung(en) so beschaffen sind, daß sie das zweite modulierte akustische Signal (B) empfangen können.

10. System nach Anspruch 8 oder 9, **dadurch gekennzeichnet, daß** das Datenendgerät (50, 51, 52) mit einem bestimmten Ort (101) des Weitverkehrsdatennetzes (100) verbunden ist, der eine Datenbank (111) aufweist, die die gegebene Liste von Kennungen (ID_A, ID_B, ID_C, ...) enthält, und daß der Vergleich der heruntergeladenen Kennung(en) (ID_1, ID_2, ID_3, ...) mit der gegebenen Liste von Kennungen (ID_, ID_B, ID_C, ...) durch den bestimmten Ort (101) ausgeführt wird.

11. System nach Anspruch 8, 9 oder 10, **dadurch gekennzeichnet, daß** wenigstens einer Kennung außerdem ein Schlüssel zugeordnet ist, der Zugriff auf privilegierte Daten an dem Ort, dem die Kennung zugeordnet ist, gewährt.

12. System nach einem der Ansprüche 8 bis 11, **dadurch gekennzeichnet, daß** das erste modulierte akustische Signal (A) mittels einer Fernsehübertragungsanlage (2, 2a) oder einer Radioübertragungsanlage (3, 3a) übertragen wird.
